# EUROPÄISCHE PATENTANMELDUNG

(11) **EP 4 749 660 A1**
(43) Veröffentlichungstag der Anmeldung: **27.05.2026**
(21) Anmeldenummer: 24214484.8
(22) Anmeldetag: 21.11.2024
(51) Int. Cl.: G21F 1/10

(54) **VERWENDUNG EINER MATRIX ZUR ABSCHIRMUNG VON RÖNTGENSTRAHLUNG**

(71) Anmelder: Siemens Healthineers AG, 91301 Forchheim (DE)
(72) Erfinder: Gollwitzer, Helmut, 92681 Erbendorf (DE); Seifert, Martin, 95447 Bayreuth (DE); Weig, Matthias, 95615 Marktredwitz (DE)
(74) Vertreter: Siemens Healthineers Patent Attorneys

(57) **Zusammenfassung**

Die vorliegende Erfindung betrifft die Verwendung einer Matrix (8), umfassend mindestens ein Silikonpolymer und mindestens einen Füllstoff als Strahlenschutz gegen Röntgenstrahlung, sowie ein Verfahren zur Herstellung dieser Matrix.

## Beschreibung

Unabhängig vom grammatikalischen Geschlecht eines bestimmten Begriffes sind Personen mit männlicher, weiblicher oder anderer Geschlechteridentität mit umfasst.

Die vorliegende Erfindung betrifft die Verwendung einer Matrix umfassend mindestens ein Silikonpolymer und mindestens einen Füllstoff als Strahlenschutz gegen Röntgenstrahlung sowie ein Verfahren zur Herstellung dieser Matrix.

Der Mensch ist in zunehmendem Maße ionisierender Strahlung aus einer Vielzahl von Quellen ausgesetzt. Die Strahlung tritt als hochenergetische elektromagnetische Strahlung auf, insbesondere als Röntgen- oder Gammastrahlung. Sie kann vom Menschen nicht direkt wahrgenommen werden. Je nach Art und Dauer der Strahlenexposition können jedoch gesundheitliche Schäden auftreten.

Die Exposition mit solch energiereicher Strahlung kann gewünscht, z. B. bei der medizinischen Anwendung ionisierender Strahlung beim diagnostischen oder therapeutischen Röntgen oder in der Nuklearmedizin, bei der zerstörungsfreien Werkstoffprüfung, in der Radiometrie oder in der Spezialmesstechnik mit Vorrichtungen, die radioaktive Stoffe enthalten, oder unerwünscht sein, z. B. beim Betrieb von Störstrahlern wie Beschleunigeranlagen, Elektronenmikroskopen, Elektronenschweißanlagen, Elektronenröhren oder Monitoren.

Beim Betrieb von Röntgenanlagen oder anderen Geräten, die ionisierende Strahlung aussenden, kann es zu einer unbeabsichtigten Strahlenexposition des Bedienungspersonals oder Dritter kommen. Daher werden viele Maßnahmen getroffen, um den Anwender oder Dritte vor dieser Strahlung zu schützen. In vielen Fällen ist es nicht möglich, solche Anlagen nur in Abwesenheit Dritter zu betreiben. Auch eine vollständige Trennung des Anwenders von der Strahlungsquelle ist in vielen Fällen nicht möglich und auch nicht praktikabel, da der Anwender die Anlage nur in unmittelbarer Nähe der Anlage und der Strahlungsquelle bedienen kann.

Dies gilt insbesondere für die medizinische Anwendung von Röntgenstrahlung in der Röntgendiagnostik und Röntgentherapie, wo baulicher und apparativer Strahlenschutz sowie persönliche Schutzausrüstungen eingesetzt werden müssen, um das Bedienungspersonal und/oder den Patienten von der Strahlung abzuschirmen, mit Ausnahme der Bereiche, in denen die Bestrahlung erwünscht ist.

Typische Strahlenschutzmaterialien sind flächige Materialien, insbesondere metallisches Blei oder Bleiverbindungen, insbesondere zum Schutz vor Röntgenstrahlung. Blei hat den Vorteil, dass es zu niedrigen Kosten leicht verfügbar ist, eine hohe Dichte und eine hohe Ordnungszahl besitzt. Es ist daher ein guter Absorber für ionisierende Strahlung, z. B. Röntgenstrahlung, die bei Beschleunigungsspannungen von 40 bis 300 kV erzeugt wird. Die Nachteile von Blei liegen in der toxikologischen Bedenklichkeit. Hinzu kommt das hohe Gewicht der bleihaltigen Schutzausrüstung.

Blei weist aufgrund seiner Materialeigenschaften zwar gute Abschirmeigenschaften bei geringen Materialdicken auf. Der Einsatz von bleihaltigen Werkstoffen ist jedoch mit Nachteilen verbunden. Derzeit besteht in der EU eine Ausnahmeregelung für die Verwendung von bleihaltigen Werkstoffen in Medizinprodukten. Dennoch wird es auch in Zukunft einen Bedarf für die Verwendung von Blei geben. Die Toxizität von Blei für Mensch und Umwelt ist nach wie vor gegeben. Ein weiterer Nachteil von Blei für den Strahlenschutz besteht darin, dass Bleiauskleidungen geklebt oder anderweitig an einer tragenden Struktur befestigt werden müssen.

Es besteht daher ein großer Bedarf an Materialien, die ähnlich gute Abschirmeigenschaften gegenüber ionisierender Strahlung aufweisen wie Blei, aber leichter, umweltfreundlicher und toxikologisch unbedenklicher sind als Blei.

Aufgabe der vorliegenden Erfindung ist es, im Vergleich zum Stand der Technik und zu den immer noch bevorzugt eingesetzten bleihaltigen Materialien, leichtere, toxikologisch unbedenklichere, vollständig bleifreie, gegen ionisierende Strahlung wie z. B. Röntgenstrahlung besser als Blei abschirmende Mischungen zur Verfügung zu stellen.

Die vorliegende Erfindung betrifft daher die Verwendung einer Matrix umfassend
a) mindestens ein Silikonpolymer und
b) mindestens einen Füllstoff
als Strahlenschutz gegen Röntgenstrahlung.

Im Folgenden werden bevorzugte Ausführungsformen für die erfindungsgemäße Verwendung näher beschrieben.

Vorzugsweise kann die Matrix in verschiedenen Formen, wie z.B. als Schicht, Film, Faser oder Pulver, verwendet werden. Beispielsweise kann die Matrix auf einer Oberfläche appliziert werden, um eine Strahlenabschirmung zu schaffen und somit als Strahlenschutz zu fungieren. Ebenfalls kann die Matrix in einem medizinischen Gerät integriert werden, um die Strahlenbelastung für Patienten und dem medizinischen Personal zu reduzieren.

Eine Matrix im Sinne der vorliegenden Erfindung kann aus einem Silikonpolymer und einem Füllstoff aufgebaut sein und auch als Verbundwerkstoff oder Kompositmaterial bezeichnet werden. Eine solche Matrix besteht vorzugsweise aus einer kontinuierlichen Polymerphase (dem Matrixmaterial), in die Füllstoffe (Partikel, Fasern oder andere Verstärkungsmaterialien) eingebettet sind. Das Matrixmaterial umgibt den Füllstoff und verbindet die einzelnen Partikel miteinander, was dem Material eine verbesserte mechanische Stabilität und spezifische Eigenschaften verleiht.

Vorteilhafte Eigenschaften und Funktionen sind beispielsweise:
- Das Silikonpolymer bildet die Hauptstruktur und ist für die Verteilung von Kräften sowie für die Bindung und den Zusammenhalt der Füllstoffe verantwortlich.
- Der Füllstoff verbessert spezifische Eigenschaften wie Festigkeit, Steifigkeit, Wärmeleitfähigkeit oder Wärmebeständigkeit und kann auch die Kosten des Materials senken.

Insgesamt resultiert daraus ein Material mit kombinierten Eigenschaften, die besser auf spezifische Anwendungen zugeschnitten sind als die Eigenschaften des reinen Silikonpolymers oder des Füllstoffs allein.

Vorzugsweise ist das Silikonpolymer ausgewählt aus der Gruppe bestehend aus Polysiloxanen, Polysilanen, Polysilazanen, Polycarbosilazanen, Polysiloxazanen, Polysiloxanen mit organischen Modifikationen, Silikonelastomeren, Silikonharzen, Polysiloxan-Copolymeren oder Mischungen daraus.

Vorzugsweise können Polysiloxane (Silikone), beispielsweise Polydimethylsiloxan (PDMS) oder Polymethylhydrosiloxane (PMHS), verwendet werden. Ebenfalls können Polysilane, beispielsweise Poly(dimethylsilan) oder Poly(phenylmethylsilane), Polysilazane (beispielsweise Perhydropolysilazane (PHPS) oder Poly(methylsilylazane), Polysiloxazane oder Polysiloxanes mit organischen Modifikationen verwendet werden.

Ganz besonders bevorzugt ist das Silikonpolymer ein Poly(carbo)silazan, d.h. ein Polymer, das aus Silizium-, Kohlenstoff- und Stickstoffatomen aufgebaut ist. Diese Verbindung weist eine hohe Dichte und eine gute Absorption von Röntgenstrahlung auf.

Das Poly(carbo)silazan wird bevorzugt durch eine Sol-Gel-Prozess hergestellt. Dabei werden vorzugsweise Silizium- und Kohlenstoffverbindungen mit Ammoniak zur Reaktion gebracht, um ein Gel zu bilden. Dieses Gel kann dann getrocknet werden und bei hohen Temperaturen pyrolysiert werden, um das Poly(carbo)silazan zu erhalten.

Durch die Verwendung eines Füllstoffes kann eine verbesserte Strahlenabschirmung generiert werden. Ebenfalls kann die Verwendung eines Füllstoffes zu einer erhöhten mechanischen Stabilität der Matrix führen.

Daher umfasst der Füllstoff vorzugsweise ein oder mehrere Elemente und/oder Legierungen und/oder Verbindungen dieser Elemente, unabhängig voneinander ausgewählt aus der Gruppe, bestehend aus Barium, Indium, Zinn, Molybdän, Niob, Tantal, Zirkonium, Bismut und Wolfram.

Der Füllstoff ist vorteilhafterweise mit dem mindestens einem Silikonpolymer kompatibel, d.h. es kann eine physikalische Wechselwirkung zwischen dem Silikonpolymer und Füllstoff geben, die die Eigenschaften der sich ergebenden Matrix beeinflussen kann. So sind z. B. die Oxide meistens besser als die entsprechenden Metalle in dem Silikonpolymer dispergierbar, so dass sich der Füllstoff gleichmäßiger in dem Silikonpolymer verteilen lässt. Daraus resultieren höhere mechanische Eigenschaften.

Die Bestandteile des Füllstoffes in der Matrix bei der erfindungsgemäßen Verwendung können in Pulverform eingesetzt werden und sind in dem Silikonpolymer vorteilhafterweise homogen verteilt.

Beim Blenden des Füllstoffes mit dem Silikonpolymer oder beim Dispergieren im polymerbildenden Rohstoff werden mittlere Teilchendurchmesser von 0,1 µm bis 200 µm, bevorzugt 0,5 bis 100 µm eingesetzt.

Der Anteil des Füllstoffes in dem Silikonpolymer kann in Abhängigkeit von der Energie der abzuschirmenden Strahlung als auch von der Verträglichkeit der Mischung mit dem Silikonpolymer angepasst werden.

Vorzugsweise umfasst die Matrix in der erfindungsgemäßen Verwendung
a) 10 bis 90 Gew.-% mindestens eines Silikonpolymers,
b) 10 bis 85 Gew.-% mindestens eines Füllstoffs und
c) 0 bis 5 Gew.-% mindestens eines Zusatzstoffes, bezogen auf die Gesamtmasse der Matrix.

Besonders bevorzugt umfasst die Matrix in der erfindungsgemäßen Verwendung
a) 15 bis 80 Gew.-% mindestens eines Silikonpolymers,
b) 15 bis 80 Gew.-% mindestens eines Füllstoffs und
c) 0 bis 5 Gew.-% mindestens eines Zusatzstoffes, bezogen auf die Gesamtmasse der Matrix.

Ganz besonders bevorzugt umfasst die Matrix in der erfindungsgemäßen Verwendung
a) 15 bis 80 Gew.-%, vorzugsweise 15 bis 79,999 Gew.-%, mindestens eines Poly(carbo)silazanes,
b) 15 bis 80 Gew.-%, vorzugsweise 15 bis 79,999 Gew.-%, mindestens eines Füllstoffs und
c) 0 bis 5 Gew.-%, vorzugsweise 0,001 bis 5 Gew.-%, mindestens eines Zusatzstoffes, bezogen auf die Gesamtmasse der Matrix.

Der Füllstoff kann sowohl zu den Ausgangsstoffen (Monomere, Lösungsmittel etc.) des Silikonpolymers vor der Polymerisation gegeben werden als auch nachträglich in das Silikonpolymer eingearbeitet werden.

Die Einarbeitung des Füllstoffes in das Silikonpolymer nach der Polymerisation erfolgt durch die dem Fachmann bekannten Verfahrensmöglichkeiten, wie Kneten, Aufschmelzen, Kaltpressen, Warmpressen, Kalandrieren, Spritzgießen, Extrudieren, Sintern oder Spritzpressen.

Die Matrix kann auch erst verarbeitet werden und durch Extrusion, Kalandrieren, Druckverformung oder anderen dem Fachmann bekannten Verarbeitungsmöglichkeiten beispielsweise zu Platten umgeformt werden.

Um eine höhere Bindung der Füllstoffe an das Silikonpolymer zu erzielen, liegen die Füllstoffe vorteilhafterweise als polare Füllstoffe vor.

Vorzugsweise sind die Legierungen und/oder Verbindungen dieser Elemente unabhängig voneinander ausgewählt sind aus der Gruppe bestehend aus Oxiden, Carbonaten, Sulfaten, Halogeniden, Hydroxiden, Wolframaten, Carbiden, Sulfiden.

Zudem besteht der Füllstoff vorzugsweise aus Partikeln mit einem mittleren Teilchendurchmesser von 0,1 µm bis 100 µm, besonders bevorzugt von 0,5 µm bis 85 µm, ganz besonders bevorzugt von 2 µm bis 50 µm.

Die Partikelgröße, insbesondere der mittleren Teilchendurchmesser, kann beispielsweise mittels eines Laserbeugung, wie mit einem Mastersizer 3000+ Ultra, ermittelt werden.

Vorzugsweise umfasst die Verwendung Füllstoffe, die als Partikel vorliegen, die mit dem Poly(carbo)silazan kombiniert werden können, um die Abschirmeigenschaften zu steuern. Geeignete Partikel sind z.B.:
- Barium basierte Verbindungen
- Wolfram basierte Verbindungen
- Bismut-Oxide

Diese Partikel können aufgrund ihrer Größe, Morphologie, kristallographischen Eigenschaften, Pyrolyse-Eigenschaften, Nachhaltigkeits-Eigenschaften und Partikeldurchmesser ausgewählt werden.

Vorzugsweise weisen die Füllstoffe, insbesondere wenn sie als Partikel vorliegen, eine monomodale oder bimodale Partikelgrößenverteilung auf.

Eine monomodale oder bimodale Partikelgrößenverteilung im Sinne der vorliegenden Erfindung bezieht sich auf die Verteilung der Größen des Füllstoffes (beispielsweise als Partikel) in dem Silikonpolymer.

Bei einer monomodalen Partikelgrößenverteilung gibt es einen einzigen Peak in der Verteilungskurve. Das bedeutet, dass die meisten Partikel eine ähnliche Größe haben und um einen zentralen Wert (Modus) gruppiert sind. Die Partikelgrößen sind also relativ homogen.

Bei einer bimodalen Partikelgrößenverteilung gibt es zwei Peaks in der Verteilungskurve. Dies zeigt, dass es zwei dominante Partikelgrößen gibt. Die Partikel sind also in zwei unterschiedliche Größenklassen unterteilt, was auf unterschiedliche Herstellungsprozesse, Agglomerationen oder Mischungen hindeuten kann.

Vorzugsweise ist die Matrix eine Schicht mit einer Dicke im Bereich von 1 µm bis 500 µm, bevorzugt von 1 µm bis 400 µm, ganz besonders bevorzugt von 2 µm bis 250 µm.

Vorzugsweise ist die Matrix eine Schicht auf einer geometrisch oder funktionell zusammenhängenden Fläche zur Abschirmung von Röntgen-Streustrahlung in einem Bauteil der medizinischen Bildgebungskette (z.B. Kollimator, Detektor, Röntgenstrahlungsquelle/-erzeuger) mit einer Dicke im Bereich von 1 µm bis 500 µm, bevorzugt von 1 µm bis 400 µm, ganz besonders bevorzugt von 2 µm bis 250 µm.

Ganz besonders bevorzugt ist die Matrix eine Schicht auf einem Kollimator für eine Röntgenstrahlungsquelle mit einer Dicke im Bereich von 1 µm bis 500 µm, vorzugsweise von 1 µm bis 400 µm, ganz besonders bevorzugt von 2 µm bis 250 µm, wobei die Matrix
a) 15 bis 80 Gew.-%, vorzugsweise 15 bis 79,999 Gew.-%, mindestens eines Poly(carbo)silazanes,
b) 15 bis 80 Gew.-%, vorzugsweise 15 bis 79,999 Gew.-%, mindestens eines Füllstoffs und
c) 0 bis 5 Gew.-%, vorzugsweise 0,001 bis 5 Gew.-%, mindestens eines Zusatzstoffes, bezogen auf die Gesamtmasse der Matrix, umfasst.

Um die Eigenschaften von Silikonpolymeren gezielt zu beeinflussen, können diese thermisch oder katalytisch vernetzt werden. Durch die Vernetzung entstehen dreidimensionale Strukturen, die die mechanischen, thermischen und chemischen Eigenschaften eines Materials, d.h. des Silikonpolymers und damit die Matrix verbessern.

Die thermische Vernetzung ist ein Verfahren, bei dem die Polymerisation oder Vernetzung durch Wärme induziert wird.

Im Gegensatz zur thermischen Vernetzung erfolgt die katalytische Vernetzung durch den Einsatz von Katalysatoren, die die chemische Reaktion zur Vernetzung beschleunigen oder initiieren, ohne selbst verbraucht zu werden. Katalysatoren können sowohl in flüssiger als auch in fester Form vorliegen und sind auf das jeweilige Polymer und dessen reaktive Gruppen abgestimmt. Sie ermöglichen eine Vernetzung bei niedrigeren Temperaturen und/oder unter milderen Bedingungen.

Vorzugsweise wurde die Matrix thermisch oder katalytisch vernetzt.

Die Matrix wird vorzugsweise einer Pyrolysereaktion für 1 min bis 2 h ausgesetzt.

Generell können viele Mechanismen zur Vernetzung beitragen und können zum Teil auch parallel ablaufen:
- Dehydrokupplung
- Hydrosilylierung, z.B. bei Verwendung von Poly(carbo)silazanen mit Vinylgruppen
- Hydrolyse
- Kondensation
- Thermische Zersetzung/Karbothermische Umwandlung
- Usw.

Bei der Deydrokupplung greifen die Katalysatoren (z.B. Palladium oder Platin. Es ist eine Vielzahl weiterer Katalysatoren aus der Literatur bekannt).

Zudem spielt die Atmosphäre (z.B. Luft, N₂-, Ar-Atmo, usw.) sowie der verwendete Partialdruck bei der thermischen Vernetzung eine entscheidende Rolle, wann welche Reaktionen ablaufen. Im vorliegenden Fall zum Beispiel (bei Verwendung eines Polymers mit Si-N-Backbone und NH-funktionellen Gruppen) ist vorzugsweise eine Auslagerung an Luft vorgesehen. Dies resultiert in einer durch Sauerstoff induzierten, beschleunigten Vernetzungsreaktion vor allem bei niedrigeren Temperaturen (T <200 °C) durch z.B. Hydrolyse von Si-N und Kondensation von Si-OH.

Auch das verwendete Lösemittel kann bereits zu einer Vernetzungsreaktion führen.

Vorzugsweise umfasst das Polycarbosilazan eine Wiederholungseinheit der Formel (1) und eine Wiederholungseinheit der Formel (2): 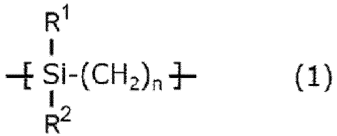 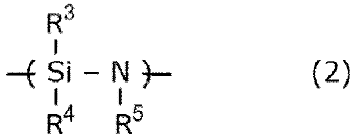 wobei R¹, R², R³ and R⁴ jeweils unabhängig voneinander ein Wasserstoffatom oder ein C₁₋₇-Alkyl, vorzugsweise ein C₁₋₄-Alkyl; R⁵ ein Wasserstoffatom oder vorzugsweise eine Gruppe zur Vernetzung des Polymers ist, und n ist 1-5.

Besonders bevorzugt umfasst das Polycarbosilazan eine Wiederholungseinheit der Formel (2): 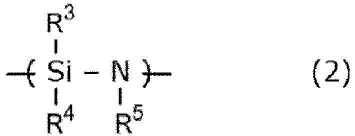 wobei, R³ and R⁴ jeweils unabhängig voneinander ein Wasserstoffatom oder ein C₁₋₇-Alkyl, vorzugsweise ein C₁₋₄-Alkyl; R⁵ ein Wasserstoffatom oder vorzugsweise eine Gruppe zur Vernetzung des Polymers ist, und n ist 1-5.

Sofern nicht ausdrücklich anders angegeben, bedeutet in der vorliegenden Beschreibung "Alkyl" ein lineares oder verzweigtes Alkyl. Eine Alkylgruppe umfasst eine Methyl-, Ethyl-, Propyl-, Butyl-, Pentyl-, Hexyl-, Heptylgruppe.

Eine Gruppe zur Vernetzung des Polymers kann ausgewählt werden aus für den Fachmann bekannten Gruppen zur Polymervernetzung.

Ein weiterer Gegenstand der Erfindung ist ein Verfahren zur Herstellung einer Matrix gemäß der erfindungsgemäßen Verwendung, wobei das mindestens eine Silikonpolymer und der mindestens ein Füllstoff vermischt werden.

Im Folgenden werden bevorzugte Ausführungsformen für das erfindungsgemäße Herstellungsverfahren näher beschrieben.

Vorzugsweise umfasst das Verfahren zur Herstellung eines Films, aufgebaut aus einer Matrix, die Schritte:
i. Ausbildung einer Beschichtung auf einem Substrat mit der Matrix,
ii. Vernetzung der Beschichtung auf dem Substrat, unter vorzugsweiser Bildung des Films. Der Film weist dabei vorzugsweise eine Dicke im Bereich von 1 µm bis 500 µm, bevorzugt von 1µm bis 400 µm, ganz besonders bevorzugt von 2 µm bis 250 µm auf.

Vorzugsweise erfolgt bei dem erfindungsgemäßen Verfahren zur Herstellung eines Films die Ausbildung einer Beschichtung in Schritt i) mittels Streich-, Gieß-, Rakel-, Spin-Coating-, Tauchbeschichtung oder Sprayverfahren.

Vorzugsweise wird in dem erfindungsgemäßen Verfahren zur Herstellung eines Films die Vernetzung in Schritt ii) thermisch durchgeführt, indem man die Beschichtung einer Luft- oder Sauerstoffatmosphäre in einem Temperaturbereich unter Standardbedingungen von 10°C bis 245°C von 1 min bis 7 h aussetzt, vorzugsweise von 50°C bis 200°C von 10 min bis 2 h.

Vorzugsweise wird in dem erfindungsgemäßen Verfahren zur Herstellung eines Films die Vernetzung in Schritt ii) an Luft bei Temperaturen kleiner 250 °C durchgeführt, vorzugsweise bei 10°C bis 200°C.

Generell können viele Mechanismen zur Vernetzung beitragen und können zum Teil auch parallel ablaufen:
- Dehydrokupplung
- Hydrosilylierung, z.B. bei Verwendung von Poly(carbo)silazanen mit Vinylgruppen
- Hydrolyse
- Kondensation
- Thermische Zersetzung/Karbothermische Umwandlung
- Usw.

Bei der Deydrokupplung greifen die Katalysatoren (z.B. Palladium oder Platin. Es ist eine Vielzahl weiterer Katalysatoren aus der Literatur bekannt).

Zudem spielt die Atmosphäre (z.B. Luft, N₂-, Ar-Atmo, usw.) sowie der verwendete Partialdruck bei der thermischen Vernetzung eine entscheidende Rolle, wann welche Reaktionen ablaufen. Im vorliegenden Fall zum Beispiel (bei Verwendung eines Polymers mit Si-N-Backbone und NH-funktionellen Gruppen) ist vorzugsweise eine Auslagerung an Luft vorgesehen. Dies resultiert in einer durch Sauerstoff induzierten, beschleunigten Vernetzungsreaktion vor allem bei niedrigeren Temperaturen (T <200 °C) durch z.B. Hydrolyse von Si-N und Kondensation von Si-OH.

Auch das verwendete Lösemittel kann bereits zu einer Vernetzungsreaktion führen.

Die oben beschriebenen Eigenschaften, Merkmale und Vorteile dieser Erfindung werden klarer und verständlicher im Zusammenhang mit folgenden Figuren und ihren Beschreibungen. Dabei sollen die Figuren und Beschreibungen die Erfindung und ihre Ausführungsformen in keiner Weise einschränken. In verschiedenen Figuren sind gleiche Komponenten mit korrespondierenden Bezugszeichen versehen.

Die Figuren sind in der Regel nicht maßstabsgetreu. Die Figuren zeigen:
- Fig. 1:: In der Figur 1 wird eine schematische Ansicht von einer Röntgenstrahlquelle und einem Kollimator illustriert.
- Fig. 2:: Darstellung einer Außenschicht des Kollimators.
- Fig. 3:: Rasterelektronenmikroskop-Aufnahme eines Substrats mit einer Matrix.

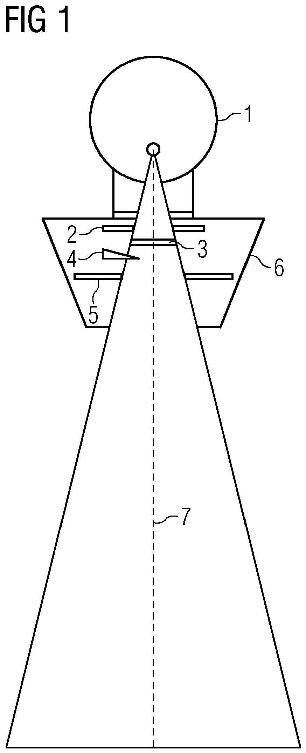

In der Figur 1 wird die Anordnung einer Röntgenstrahlquelle 1 und eines Kollimators 6 illustriert. Die von der Röntgenstrahlquelle 1 erzeugte Röntgenstrahlung wird mittels eines Kollimators 6 zu einem Nutzstrahlenfeld 7 eingeblendet. Die Anordnung in dem Kollimator besteht aus mehreren Komponenten, die gemeinsam dazu beitragen, einen fokussierten und gezielten Strahl von Röntgenstrahlen zu erzeugen. Dies geschieht üblicherweise mit Hilfe einer fokusnahen Blende 2, gegebenenfalls eines Vorfilters 3, gegebenenfalls eines oder mehrerer Keilfilter 4 und mindestens einer Rechteckeinblendung 5. Zunächst emittiert die Röntgenstrahlquelle 1 eine breite Palette von Röntgenstrahlen. Diese Strahlen werden dann durch die fokusnahe Blende 2 geleitet, die den Strahl auf einen kleinen Bereich einblendet. Um die Intensität des Strahls zu regulieren und unerwünschte Strahlenarten auszufiltern, wird ein Vorfilter 3 verwendet. Dieser Filter kann beispielsweise eine bestimmte Wellenlänge oder Energiebereich filtern. Darüber hinaus ist ein Keilfilter 4 installiert, der für eine homogene Dosisverteilung auf dem Bildempfänger speziell im Randbereich des Objektes sorgt und unerwünschte Strahlenanteile abschwächt. Ein weiteres Filterelement ist die Rechteckeinblendung 5, die den Strahl auf den zu untersuchenden Bereich ausrichtet und unerwünschte Bereiche ausblendet. Das Nutzstrahlenfeld 7 ist das Ergebnis dieser Kollimierung. Es ist ein schmales und intensives Feld, das nun für weitere Anwendungen bereitsteht.

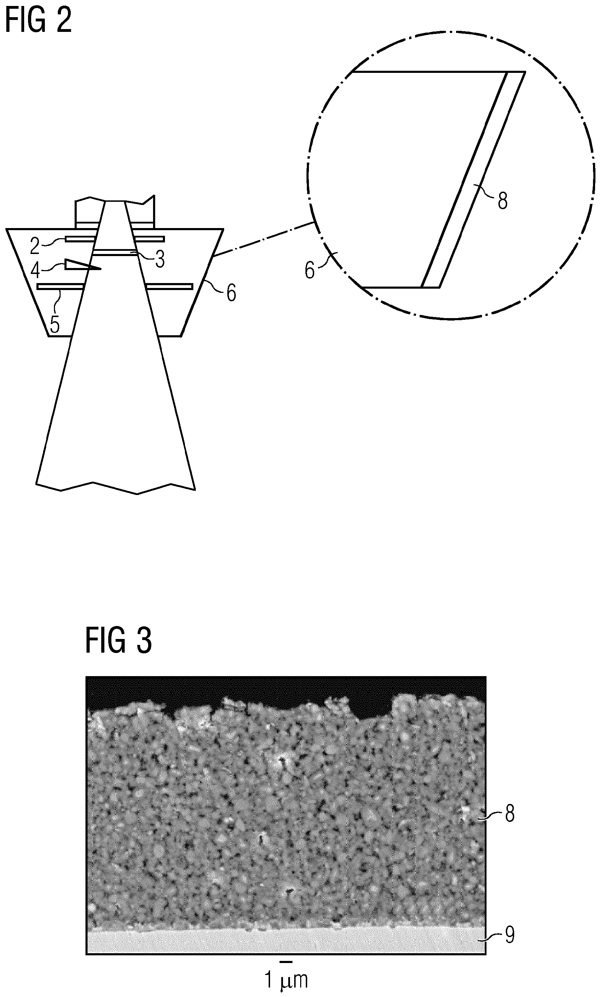

In der Figur 2 wird ein Ausschnitt des Kollimators 6 mit der aufgebrachten Matrix 8 vergrößert dargestellt. Die Matrix 8 ist in Form eines Films auf dem Kollimator 6 angeordnet.

In der Figur 3 wird eine Rasterelektronenmikroskop-Aufnahme eines Substrates 9 aus Stahl mit einer Matrix 8 (hier auch Precusormatrix) gezeigt, bei der die Matrix 8 aus einem Polycarbosilazan und TiSi₂-Partikeln besteht. Auf dem Bild sind daher die Partikel, eingebettet in die Precursormatrix zu sehen. Aufgrund der Sprühapplikation sind die Partikel mit der Precursorlösung (geeignetes Lösemittel, z.B. Toluol, Ether, usw.) benetzt. Durch Vernetzung des Precursors, (Silikonpolymers) bildet sich um die Partikel ein 3D-Netzwerk aus.

## Patentansprüche

1. Verwendung einer Matrix (8) umfassend
a) mindestens ein Silikonpolymer und
b) mindestens einen Füllstoff
als Strahlenschutz gegen Röntgenstrahlung.

2. Verwendung nach Anspruch 1, wobei das Silikonpolymer ausgewählt ist aus der Gruppe bestehend aus Polysiloxanen, Polysilanen, Polysilazanen, Polycarbosilazanen, Polysiloxazanen, Polysiloxanen mit organischen Modifikationen, Silikonelastomeren, Silikonharzen, Polysiloxan-Copolymeren oder Mischungen daraus.

3. Verwendung nach Anspruch 1 oder 2, wobei die Matrix (8)
a) 10 bis 90 Gew.-% mindestens eines Silikonpolymers,
b) 10 bis 85 Gew.-% mindestens eines Füllstoffs und
c) 0 bis 5 Gew.-% mindestens eines Zusatzstoffes, bezogen auf die Gesamtmasse der Matrix, umfasst.

4. Verwendung nach einem der Ansprüche 1 bis 3, wobei der Füllstoff ein oder mehrere Elemente und/oder Legierungen und/oder Verbindungen dieser Elemente, unabhängig voneinander ausgewählt aus der Gruppe, bestehend aus Barium, Indium, Zinn, Molybdän, Niob, Tantal, Zirkonium, Bismut und Wolfram, umfasst.

5. Verwendung nach Anspruch 4, wobei die Legierungen und/oder Verbindungen dieser Elemente unabhängig voneinander ausgewählt sind aus der Gruppe bestehend aus Oxiden, Carbonaten, Sulfaten, Halogeniden, Hydroxiden, Wolframaten, Carbiden, Sulfiden.

6. Verwendung nach einem der Ansprüche 1 bis 5, wobei der Füllstoff aus Partikeln mit einem mittleren Teilchendurchmesser von 0.1 µm bis 100 µm besteht.

7. Verwendung nach Anspruch 6, wobei die Partikel eine monomodale oder bimodale Partikelgrößenverteilung haben.

8. Verwendung nach einem der Ansprüche 1 bis 7, wobei die Matrix (8) eine Schicht mit einer Dicke im Bereich von 1 µm bis 500 µm ist.

9. Verwendung nach Anspruch 8, wobei die Matrix (8) eine Schicht auf einer geometrisch oder funktionell zusammenhängenden Fläche zur Abschirmung von Röntgen-Streustrahlung in einem Bauteil der medizinischen Bildgebungskette mit einer Dicke im Bereich von 1 µm bis 500 µm ist.

10. Verwendung nach einem der Ansprüche 1 bis 9, wobei die Matrix (8) thermisch oder katalytisch vernetzt wurde.

11. Verwendung nach einem der Ansprüche 2 bis 10, wobei das Polycarbosilazan eine Wiederholungseinheit der Formel (1) und eine Wiederholungseinheit der Formel (2) umfasst: 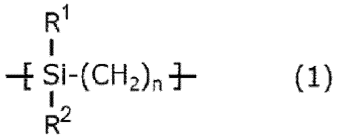 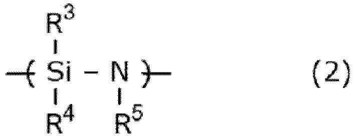 wobei R¹, R², R³ and R⁴ jeweils unabhängig voneinander ein Wasserstoffatom oder ein C₁₋₄-Alkyl; R⁵ ein Wasserstoffatom ist, und n ist 1-5.

12. Verfahren zur Herstellung einer Matrix (8) nach einem der Ansprüche 1 bis 11 wobei das mindestens eine Silikonpolymer und der mindestens eine Füllstoff vermischt werden.

13. Verfahren zur Herstellung eines Films, aufgebaut aus einer Matrix (8), umfassend die Schritte:
i. Ausbildung einer Beschichtung auf einem Substrat (9) mit der Matrix (8) nach einem der Ansprüche 1 bis 11,
ii. Vernetzung der Beschichtung auf dem Substrat.

14. Verfahren zur Herstellung eines Films nach Anspruch 13, wobei die Ausbildung einer Beschichtung in Schritt i) mittels Streich-, Gieß-, Rakel-, Spin-Coating- Tauchbeschichtung oder Sprayverfahren erfolgt.

15. Verfahren zur Herstellung eines Films nach Anspruch 13 oder 14, wobei die Vernetzung in Schritt ii) thermisch durchgeführt wird, indem man die Beschichtung einer Luft- oder Sauerstoffatmosphäre in einem Temperaturbereich unter Standardbedingungen von 10°C bis 245°C von 1 min bis 7 h aussetzt.

16. Verfahren zur Herstellung eines Films nach Anspruch 13 oder 14, wobei die Vernetzung in Schritt ii) an Luft bei Temperatur kleiner 250°C durchgeführt wird.
